# EUROPÄISCHE PATENTANMELDUNG

(11) **EP 2 128 828 A1**
(43) Veröffentlichungstag der Anmeldung: **02.12.2009**
(21) Anmeldenummer: 08157022.8
(22) Anmeldetag: 27.05.2008
(51) Int. Cl.: G07F 7/00, G06F 21/00, G06Q 30/00, G07B 15/00

(54) **Verfahren und System zur sicheren Zuordnung eines Privilegs**

(71) Anmelder: Prof. Bartmann Information Systems GmbH, 90053 Regensburg (DE)
(72) Erfinder: Bakdi, Idir, 93458, Eschlkam (DE); Wölfl, Thomas, 93047, Regensburg (DE)
(74) Vertreter: Lang, Christian

(57) **Zusammenfassung**

Die vorliegende Erfindung betrifft ein Verfahren und ein System zur sicheren Ausstellung eines Berechtigungsscheines bei einer Zuordnung eines Privilegs, bei welcher sich Aussteller des Privilegs und Empfänger an getrennten Orten befinden können, wobei ein erstes Softwareprodukt vorgesehen ist, welches dem Empfänger des Privilegs ermöglicht einen verschlüsselten, personenbezogenen Datensatz zu erzeugen und an den Aussteller zu übermitteln, wobei ein zweites Softwareprodukt vorgesehen ist, das es dem Aussteller ermöglicht, ein Zertifikat über das erworbene Privileg bezogen auf den verschlüsselten, personenbezogenen Datensatz zu erstellen und an den Empfänger zu übermitteln, und wobei das erste Softwareprodukt so hergerichtet ist, dass der Empfänger einen codierten Berechtigungsschein erzeugen kann, der den unverschlüsselten personenbezogenen Datensatz und die Informationen des Zertifikats in der Codierung umfasst. Die Erfindung umfasst ferner ein entsprechendes Datenkontrollgerät.

## Beschreibung

### HINTERGRUND DER ERFINDUNG

### GEBIET DER ERFINDUNG

Die vorliegende Erfindung betrifft ein Verfahren sowie ein System zur sicheren Ausstellung eines Berechtigungsscheins bei einer Zuordnung eines Privilegs, bei welcher sich Aussteller des Privilegs und Empfänger an unterschiedlichen Orten befinden können, sowie ein entsprechendes Datenkontrollgerät zur Überprüfung eines entsprechenden codierten Berechtigungsscheines.

### STAND DER TECHNIK

Das internationale Computernetz World Wide Web, auch Internet genannt, hat zu einer weltweiten Vernetzung geführt, die es ermöglicht, dass Informationen über große Distanzen in kurzer Zeit ausgetauscht werden können. Entsprechend ist es auch möglich über das Internet Waren und Dienstleistungen von Anbietern zu kaufen, die weit vom eigenen Standort entfernt lokalisiert sind.

Bei diesen Online-Verkäufen besteht jedoch das Problem darin, dass entsprechende Informationen übertragen werden, die nicht an unbefugte Dritte weitergegeben werden sollen, wie beispielsweise persönliche Daten zu Aufenthaltsorten, Wohnorten, Aktivitäten usw., die es beispielsweise einem Unbefugten ermöglichen würden, kriminelle Handlungen vorzunehmen.

Darüber hinaus bedarf es für beide Seiten eines Online-Geschäfts einer hohen Sicherheit, da üblicherweise gegenseitig völlig unbekannte Geschäftspartner einen Austausch von Leistungen vornehmen.

Bei Online-Verkäufen haben sich insbesondere auch Verkäufe von Eintrittskarten, Fahrkarten, Flugscheinen, usw. durchgesetzt. Für diese Verkäufe gibt es bereits Lösungen einen entsprechenden Verkauf durchzuführen, welche jedoch noch Nachteile aufweisen.

Existierende Ansätze für Online-Tickets binden das erteilte Privileg beispielsweise an eine Kundenkarte. Die Deutsche Bahn verkauft Fahrkarten über ihre Website, indem die gekaufte Zugverbindung zum Beispiel an die Nummer der BahnCard des Reisenden gebunden wird. Der Reisende muss die BahnCard, auf der ein Passfoto aufgedruckt ist, bei der Kontrolle zusammen mit dem ausgedruckten Online-Ticket vorzeigen. Dieser Ansatz hat den Nachteil, dass der Kunde vor dem Online-Ticketkauf eine Kundenkarte beantragen muss und diese zusätzlich zum Online-Ticket bei der Fahrt mitführen muss.

Als Alternative zur Kundenkarte wird häufig die Kreditkarte oder die EC-Karte des Kunden verwendet. Die Lufthansa stellt beispielsweise Online-Tickets (etix) aus, die mit einer Kreditkarte bezahlt werden können. Kann ein Fluggast die Karte präsentieren, mit der das etix bezahlt wurde, erhält er am Flughafen die Boardkarte am Automaten ausgedruckt. Dieser Ansatz hat den Nachteil, dass nicht alle potentiellen Kunden eine Kreditkarte besitzen. Außerdem kann nur der Kunde den Flug in Anspruch nehmen, der das Ticket bezahlt hat. Zudem werden die Daten des Kunden sowie die Flugzeiten über das Internet übertragen, so dass Sicherheitsprobleme entstehen können.

Die Firma Gavitec bietet ein Mobile-Ticketing-System an, das es ermöglicht, ein online gekauftes Ticket auf ein Handy zu laden. Beim Online-Kauf muss eine Handynummer angegeben werden. An diese Nummer wird eine Bild-SMS gesendet, welche das Zugangsprivileg als Barcode enthält. Ein ähnliches System wird mittlerweile auch von der Deutschen Bahn angeboten. Der Kunde muss bei der Kontrolle das Handy mit dem Barcode vorzeigen. Diese Lösung erfordert spezielle Barcodelesegeräte, die einen Code von einem Handydisplay zuverlässig lesen können. Außerdem stellt die Bild-SMS eine Information dar, die geheim gehalten werden muss, denn die Kenntnis dieser Information reicht bereits aus, um das Privileg zu stehlen.

Die bekannten Systeme sind auch nachteilig im Hinblick auf die Anonymität des Käufers. In allen bekannten Systemen muss der Käufer seine Identität bereits zum Zeitpunkt des Kaufs preisgeben, so dass nachvollzogen werden kann, wer beispielsweise eine bestimmte Bahnfahrkarte nutzen will.

Die bisher angebotenen Systeme weisen somit bzgl. der Anonymität, der Sicherheit der übermittelten Daten sowie hinsichtlich des notwendigen Aufwandes für die Ausstellung der entsprechenden Online-Tickets und deren Überprüfung Nachteile auf. Außerdem sind bekannte Systeme durch das Erfordernis bestimmte Ausweisdokumente mitzuführen für den Nutzer unbequem.

### OFFENBARUNG DER ERFINDUNG

### AUFGABE DER ERFINDUNG

Es ist deshalb Aufgabe der Erfindung ein Verfahren und System sowie entsprechend notwendige technische Geräte und Softwareprodukte bereitzustellen, die es ermöglichen Privilegien, wie beispielsweise die mit Eintrittskarten, Fahrkarten aber auch Lottoscheinen oder dergleichen verbundenen Berechtigungen einer Person, nämlich dem Empfänger des Privileges insbesondere auch über eine örtliche Distanz sicher und komfortabel zuzuordnen und den notwendigen Aufwand dafür gering zu halten. Insbesondere sollen das Verfahren und das System vor Diebstahl und Verlust des Privilegs, also beispielsweise der Eintrittskarte, genauso schützen, wie vor unberechtigter Vervielfältigung. Insbesondere soll vermieden werden, dass unnötige Daten des Empfängers des Privilegs übertragen werden, so dass die Anonymität des Empfängers gewahrt und damit die Sicherheit insgesamt erhöht wird.

### TECHNISCHE LÖSUNG

Diese Aufgabe wird gelöst durch ein Verfahren mit den Merkmalen des Anspruchs 1, einem System mit den Merkmalen des Anspruchs 11 und einem Datenkontrollgerät mit den Merkmalen des Anspruchs 14 sowie einem Softwareprodukt mit den Merkmalen des Anspruchs 15. Vorteilhafte Ausgestaltungen sind Gegenstand der abhängigen Ansprüche.

Dem erfindungsgemäßen Verfahren bzw. dem entsprechenden System liegt die Idee zugrunde, dass von dem Empfänger des Privilegs lediglich ein verschlüsselter personenbezogener Datensatz an den Aussteller des Privileges übermittelt wird und der Empfänger des Privilegs selbst einen codierten Berechtigungsschein erzeugt, welcher beim Zugang bzw. bei der Überprüfung der Zuordnung des Privilegs überprüft werden kann. Durch die Übermittlung von lediglich verschlüsselten personenbezogenen Daten wird insbesondere vermieden, dass persönliche Daten des Empfängers des Privilegs über unsichere Transportwege oder an unbekannte Geschäftspartner übermittelt werden.

Unter Verschlüsselung der personenbezogenen Daten wird hierbei insbesondere die Einwegverschlüsselung durch eine Hashfunktion verstanden, da es nicht notwendig und vorzugsweise nicht gewollt ist, dass die personenbezogenen Daten wieder entschlüsselt werden können. Wichtig ist lediglich, dass die personenbezogenen Daten beim Aussteller des Privilegs nicht als Klardaten übermittelt werden, so dass die Anonymität des Empfängers des Privilegs während der Übermittlung und gegenüber dem Aussteller des Privilegs gewahrt bleibt, und dass der gehashte oder verschlüsselte Wert eindeutig dem Empfänger des Privilegs zugeordnet werden kann.

Der Aussteller des Privilegs verknüpft die empfangenen, verschlüsselten, personenbezogenen Daten mit dem erworbenen Privileg und schickt das Zertifikat an den Empfänger des Privilegs zurück. Dieser codiert das Zertifikat und seine personenbezogenen Daten, die auch Grundlage der verschlüsselten, personenbezogenen Daten sind, in eine Codierung, die auf dem codierten Berechtigungsschein abgebildet wird. Bei der Zugangskontrolle bzw. Überprüfung der Zuordnung des Privilegs kann das Zertifikat bzw. die darin enthaltenen verschlüsselten personenbezogenen Daten zur Autorisierung und Entweitung verwendet werden. Hierbei ist es jedoch nicht erforderlich, dass die personenbezogenen Daten Informationen über die Identität des Nutzers enthalten, so dass dessen Anonymität auch gegenüber dem Aussteller des Privilegs gewahrt werden kann.

Der codierte Berechtigungsschein kann als Papierticket mit beispielsweise einem Barcode ausgebildet sein, aber auch in jeder anderen Art und Weise gestaltet sein, z.B. als digitales Datenpaket, welches z.B. auf einem Speichermedium wie einem USB-Stick oder einem Mobiltelefon gespeichert sein kann und bei der Zugangskontrolle von einem entsprechenden Lesegerät gelesen werden kann. Entsprechend sind derartige codierte Berechtigungsscheine im Folgenden mit umfasst, wenn von codierten Berechtigungsscheinen oder Barcode-Tickets die Rede ist.

Die Überprüfung erfolgt durch eine Decodierung des codierten Berechtigungsscheins und Vergleich der darin enthaltenen unverschlüsselten, personenbezogenen Daten mit den entsprechenden personenbezogenen Daten, die beim Zugang von dem Empfänger des Privileges vorgelegt werden müssen. Diese personenbezogenen Daten können beispielsweise entsprechende Nummern von Ausweiskarten, Bankkarten, Kundenkarten oder auch Kopien von Ausweisen aber auch das Bild des Empfängers des Privilegs selbst sein. Die Verwendung des Bildes des Empfängers des Privilegs hat den Vorteil, dass der Empfänger des Privilegs keine zusätzlichen Dokumente, wie Ausweiskarten etc., mitführen muss.

Ferner wird zur Überprüfung des Berechtigungsscheins der in der Codierung enthaltene unverschlüsselte personenbezogene Datensatz entsprechend verschlüsselt, um mit dem verschlüsselten personenbezogenen Datensatz des Zertifikats verglichen zu werden.

Damit ist eine vielfältige Überprüfung des Berechtigungsscheines gegeben. Selbst bei Verlust des Berechtigungsscheines ermöglicht dieser Berechtigungsschein einem anderen nicht den Zutritt, da er nicht die entsprechenden personenbezogenen Daten bei der Kontrolle vorweisen kann. Auch eine Kopie des Berechtigungsscheines ist nicht möglich.

Die Verschlüsselung der personenbezogenen Daten kann so erfolgen, dass dabei die Datenmenge reduziert wird und lediglich ein so genannter Fingerprint, also Fingerabdruck, erzeugt wird. Dazu kann beispielsweise eine Streuwert- oder Hash-Funktion auf die personenbezogenen Daten angewandt werden, wobei die Hash-Funktion als kollisionsresistente Funktion ausgebildet sein kann, um so die Wahrscheinlichkeit einer Übereinstimmung von unterschiedlichen verschlüsselten personenbezogenen Daten zu minimieren.

Um die Datensicherheit und die Überprüfungsmöglichkeit noch weiter zu erhöhen sowie die Anonymität des Empfängers des Privilegs gegenüber dem Aussteller auch bei mehreren Käufen eines Privilegs zu wahren, kann eine Zufallszahl erzeugt werden, die zusammen mit den personenbezogenen Daten verschlüsselt wird. Hierzu kann die Zufallszahl zunächst mit den personenbezogenen Daten konkateniert werden, um anschließend auf diese erzeugten Daten die Streuwert- oder Hash-Funktion anzuwenden. Durch die Verwendung der Zufallszahl, die ebenfalls in die Codierung des codierten Berechtigungsscheines mit aufgenommen werden kann, kann eine zusätzliche Kontrolle eingebaut werden, indem die in der Codierung des codierten Berechtigungsscheines enthaltenen persönlichen Daten mit der ebenfalls in der Codierung enthaltenen Zufallszahl in gleicher Weise verschlüsselt werden, wie die verschlüsselten personenbezogenen Daten, die mit dem Privileg verbunden sind, so dass bei der Zugangskontrolle ein entsprechender Vergleich der verschlüsselten personenbezogenen Daten in Kombination mit der Zufallszahl ermöglicht wird. Außerdem übermittelt der Empfänger des Privilegs an den Aussteller des Privilegs nicht immer den gleichen gehashten Wert, so dass der Aussteller nicht nachvollziehen kann welche Privilegien der Empfänger des Privilegs noch erworben hat, so dass die volle Anonymität gewahrt bleibt.

Eine weitere Erhöhung der Sicherheit kann dadurch erzeugt werden, dass das von dem Aussteller erzeugte Zertifikat mit einer digitalen Signatur versehen wird, welche beispielsweise mit einem privaten Schlüssel des Ausstellers erzeugt wird. Damit kann eine eindeutige Bindung des Privilegs an die codierten personenbezogenen Daten erfolgen und auf Seiten des Empfängers und/oder bei der Überprüfung des codierten Berechtigungsscheines bei der Zugangskontrolle mit dem öffentlichen Schlüssel des Ausstellers die Echtheit des Zertifikats überprüft werden.

Nach einer weiteren Ausgestaltung ist es auch denkbar, dass das Zertifikat mit einem geheimen oder öffentlichen Zertifikatsschlüssel des Empfängers verschlüsselt wird, so dass auch keine Information des Privilegs bei der Datenübermittlung erkennbar ist. Bei der Zugangskontrolle und/oder auf Seiten des Empfängers des Privilegs kann dann mittels des gleichen geheimen Zertifikatsschlüssels oder eines privaten Zertifikatsschlüssels überprüft werden, ob das Privileg richtig ist, also die richtigen Tickets oder Karten vorliegen.

Mit dem vorliegenden Verfahren bzw. System ist es möglich einen codierten Berechtigungsschein in Form eines codierten Ausdrucks zu erzeugen, so dass eine einfache Handhabung gewährleistet ist. Allerdings ist es auch vorstellbar, wie bereits oben ausgeführt, den codierten Berechtigungsschein in Form einer Datei, insbesondere auch Bilddatei zu erzeugen, welche beispielsweise auf einem mobilen Gerät, wie einem Mobiltelefon, oder Speichermedium gespeichert werden kann.

Bei dem entsprechenden Verfahren und System ist es auch möglich nach Überprüfung des codierten Berechtigungsscheines das zugrunde liegende Zertifikat zu entwerten, beispielsweise in einer Datenbank die Information zu hinterlegen, dass mit dem Zertifikat bereits eine Nutzung des Privileg stattgefunden hat, so dass weitere Nutzungen abgelehnt werden können.

Zur Durchführung des Verfahrens umfasst das System entsprechende Softwareprodukte, wobei ein erstes Softwareprodukt bei dem Empfänger vorgesehen ist, welches die Erzeugung der verschlüsselten personenbezogenen Daten, die Übermittlung dieser verschlüsselten personenbezogenen Daten an den Aussteller und die Erstellung eines codierten Berechtigungsscheines nach Empfang des vom Aussteller ausgestellten Zertifikats übernimmt. Außerdem kann das erste Softwareprodukt die Erzeugung einer Zufallszahl und deren Verarbeitung übernehmen. Das zweite Softwareprodukt, welches bei dem Aussteller eingesetzt wird, dient zum Empfang der verschlüsselten personenbezogenen Daten, der Verbindung dieser mit dem erworbenen Privileg, sowie optional das Versehen dieses entsprechenden Zertifikats mit einer digitalen Signatur und Übermittlung an den Empfänger des Privilegs.

Erstes und zweites Softwareprodukt können auch als Teile eines gemeinsamen Softwareprodukts ausgebildet sein. Außerdem ist es möglich das oder die Softwareprodukte in unterschiedlicher Form zu realisieren, nämlich gespeichert auf einem Datenträger oder als von einem Server, insbesondere auch aus dem Internet herunterladbares Datenpaket.

Da das entsprechende Verfahren nicht nur für Verkäufe von z.B. Eintrittskarten oder dergleichen eingesetzt werden kann, bei denen sich Aussteller und Empfänger des Berechtigungsscheins für ein Privileg an unterschiedlichen Orten befinden, z.B. Internetverkauf, sondern auch in einer Verkaufsstelle, können die entsprechenden Komponenten des Systems, insbesondere die Softwareprodukte zumindest auch teilweise so ineinander integriert sein, dass alle erforderlichen Handlungen an einem Ort, z.B. an einer einzigen Datenverarbeitungsanlage ausgeführt werden können. Entsprechend können auch Handlungen, die nach der obigen Beschreibung von dem Empfänger des Berechtigungsscheins vorgenommen werden, auch zumindest teilweise von dem Verkaufspersonal einer Verkaufsstelle durchgeführt werden.

Darüber hinaus umfasst das System ein entsprechendes Datenkontrollgerät mit einer Leseeinrichtung für den codierten Berechtigungsschein, z.B. in Form einer Scaneinrichtung oder eines USB-Ports, einem Display, einer Auswerteeinheit und optional Verbindungsmitteln zur Datenverbindung zwischen einzelnen Kontrollgeräten, wenn mehrere von diesen verwendet werden, und/oder einer Zentraleinheit, in der beispielsweise Informationen über die ausgegebenen und/oder entwerteten Zertifikate hinterlegt werden.

### KURZE BESCHREIBUNG DER ZEICHNUNGEN

Weitere Vorteile, Kennzeichen und Merkmale der vorliegenden Erfindung werden bei der nachfolgenden detaillierten Beschreibung eines Ausführungsbeispieles anhand der beigefügten Zeichnungen deutlich. Die Zeichnungen zeigen hierbei in rein schematischer Weise in
- Fig. 1: ein Ablaufdiagramm eines Ausführungsbeispieles für das erfindungsgemäße Verfahren mit einer integrierten Darstellung eines Datenkontrollgeräts;
- Fig. 2: eine Detaildarstellung der Erzeugung und des Austausches eines Privilegienzertifikats gemäß dem Ausführungsbeispiel der Figur 1;
- Fig. 3: eine Darstellung der Herstellung eines codierten Berechtigungsscheines gemäß dem Ausführungsbeispiel der Figuren 1 und 2; und in
- Fig. 4: eine detaillierte Darstellung der Prüfung des codierten Berechtigungsscheines, welcher gemäß dem Ausführungsbeispiel der Figuren 1 bis 3 hergestellt worden ist.

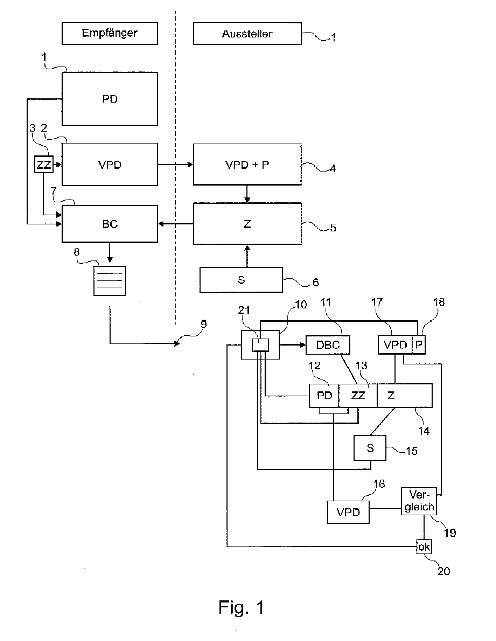

Die Figur 1 zeigt ein rein schematisches Ablaufdiagramm eines Ausführungsbeispieles der vorliegenden Erfindung.

Bei dem Ausführungsbeispiel handelt es sich um den Verkauf von Konzertkarten über das Internet, bei dem Empfänger des Privilegs, also Käufer der Konzertkarten, und Aussteller, also Verkäufer der Konzertkarten, getrennt voneinander lokalisiert sind, so dass ein direkter Austausch der Konzertkarten nicht möglich ist. Stattdessen wird eine Privilegienzuordnung über die entsprechende Distanz vorgenommen, d.h. das Privileg, also die Konzertkarten, die zum Eintritt in das Konzert berechtigen, werden in sicherer Weise über die Distanz an den Empfänger übermittelt. Allerdings kann das vorliegende Verfahren bzw. das entsprechende System und die dazugehörigen Produkte auch in unmittelbarer örtlicher Nähe, also in einem Ladengeschäft, z.B. einer Lottoannahmestelle eingesetzt werden.

In einem ersten Schritt 1 erzeugt der Empfänger des Privilegs personenbezogene Daten PD, welche später zur Autorisierung eingesetzt werden können. Dies können beispielsweise die Nummer einer Kreditkarte oder einer EC-Karte, eine Ausweisnummer, die Führerscheinnummer, das Bild des Empfängers oder Konzertbesuchers oder sonstige personenbezogene Daten sein.

Mit Hilfe eines Softwaretools, welches sich der Empfänger auf eine Datenverarbeitungsanlage geladen hat, beispielsweise von einer zur Verfügung gestellten CD oder durch Download aus dem Internet, erzeugt der Empfänger des Privilegs verschlüsselte personenbezogene Daten VPD. In diesem Schritt 2 kann neben den personenbezogenen Daten PD zusätzlich eine Zufallszahl ZZ hinzugefügt werden, die in einem Schritt 3 erzeugt worden ist. Das Hinzufügen der Zufallszahl ZZ zu den verschlüsselten personenbezogenen Daten VPD kann durch Konkatenieren der personenbezogenen Daten PD mit der Zufallszahl 3 erfolgen. Allerdings ist es auch möglich Zufallszahlen und personenbezogene Daten separat voneinander zu verschlüsseln.

Bei der Verschlüsselung kann eine Verringerung der Datenmenge bewirkt werden, so dass die verschlüsselten personenbezogenen Daten VPD lediglich einen sogenannten Fingerprint, also einem sogenannten digitalen Fingerabdruck darstellen.

Die verschlüsselten personenbezogenen Daten VPD, die beispielsweise lediglich einen Zahlenwert oder eine Buchstaben-Zahlenkombination darstellen, können ohne weiteres an den Aussteller des Privilegs geschickt werden, da aus den verschlüsselten Daten bzw. den entsprechenden Zahlen oder Zahlen-Buchstabenkombinationen ein Unberechtiger keinerlei Nutzen ziehen kann. Außerdem kann wegen der Zufallszahl auch der Aussteller des Privilegs oder eine andere Partei mit dem Zahlenwert keine Rückschlüsse ziehen.

Der Aussteller verbindet in einem Schritt 4 die verschlüsselten personenbezogenen Daten VPD mit dem Privileg P, also der Angabe, für welches Konzert der Empfänger eine Zugangsberechtigung erhält. Entsprechend stellt er in einem Schritt 5 ein Zertifikat Z aus, welches eine digitale Signatur S erhält, die in einem Schritt 6 aus dem Inhalt des Zertifikats Z, welches die verschlüsselten personenbezogenen Daten VPD und das Privileg P enthält, sowie mit einem privaten Schlüssel des Ausstellers erzeugt worden ist. Das entsprechende Zertifikat Z mit der digitalen Signatur S wird wiederum an den Empfänger übermittelt, der in einem Schritt 7 eine Codierung des empfangenen Zertifikats Z mit der digitalen Signatur S sowie seinen unverschlüsselten personenbezogenen Daten PD und der Zufallszahl ZZ vornimmt. Der so entstandene Barcode BC, der sowohl als Strichcode oder als zweidimensionaler Code ausgeführt sein kann, wird auf einem codierten Berechtigungsschein 8 ausgedruckt. Dieser codierte Berechtigungsschein 8 ersetzt die Konzertkarten.

Zum Zeitpunkt des Konzerts geht der Empfänger des Privilegs, also der Konzertkarten, mit dem codierten Berechtigungsschein 8 an die Zugangskontrolle, welche ein Datenkontrollgerät 10 hat. Das Datenkontrollgerät 10 weist ein Display 21 und eine Scaneinrichtung (nicht explizit gezeigt), sowie entsprechende Verbindungsmittel (ebenfalls nicht explizit gezeigt) zur Verbindung mit anderen Datenkontrollgeräten oder einer Zentraleinheit auf. Außerdem ist eine Auswerteeinheit vorgesehen, welche beispielsweise durch eine Software realisiert sein kann, welche auf dem Datenkontrollgerät, welches entsprechende Speichermittel und Prozessoren umfasst, ablaufen kann.

Der Bediener des Datenkontrollgeräts 10 scannt den Barcode, der sich auf dem codierten Berechtigungsschein 8 befindet im Schritt 9 ein, woraufhin das Datenkontrollgerät den decodierten Barcode DBC als Information im Schritt 11 erzeugt. Der decodierte Barcode DBC umfasst die unverschlüsselten persönlichen Daten PD, die Zufallszahl ZZ sowie das Zertifikat Z inklusive Signatur.

Die Auswerteeinheit des Datenkontrollgeräts 10 nutzt in einem Schritt 12 die unverschlüsselten personenbezogenen Daten PD, um diese auf dem Display 21 anzuzeigen und in einem Schritt 16 zusammen mit der im Schritt 13 bereit gestellten Zufallszahl ZZ über eine entsprechende Verschlüsselung verschlüsselte personenbezogen Daten VPD in einem Schritt 16 zu erzeugen.

Neben den personenbezogenen Daten PD und der Zufallszahl ZZ umfasst die Information des decodierten Barcodes DBC das Zertifikat Z mit der digitalen Signatur S.

Die digitale Signatur S wird in einem Schritt 15 durch den autorisierten öffentlichen Schlüssel des Ausstellers des Privilegs, welcher sich in dem Datenkontrollgerät 10 befindet, z.B. in einem digitalen Public-Key-Zertifikat, verifiziert und das entsprechende Ergebnis wird auf dem Display 21 dargestellt. Um die Autorisierung des Ausstellers für die Ausstellung des Privilegs zu überprüfen, kann das Datenkontrollgerät bzw. die entsprechende Software auf mehrere öffentliche Schlüssel von verschiedenen Ausstellern oder einen gemeinsamen öffentlichen Schlüssel aller möglichen Aussteller zurückgreifen.

Darüber hinaus werden aus dem Zertifikat Z im Schritt 14 die verschlüsselten personenbezogenen Daten VPD und das Privileg P ausgelesen. Während das Privileg P im Schritt 18 an das Display zur Anzeige weitergeleitet wird, werden die verschlüsselten personenbezogenen Daten im Schritt 17 an eine Vergleichseinheit, die in der Auswerteeinheit integriert ist, übermittelt, wo im Schritt 19 die aus den personenbezogenen Daten PD und der Zufallszahl ZZ im Schritt 16 erzeugten verschlüsselten personenbezogenen Daten VPD miteinander verglichen werden. Sofern im Schritt 20 eine Übereinstimmung festgestellt ist, wird dies ebenfalls auf dem Display 21 angezeigt.

Der Bediener des Datenkontrollgeräts 10, also der Prüfer an der Zugangskontrolle kann somit auf seinem Display 21 die personenbezogenen Daten PD, die Mitteilung über die Korrektheit der Signatur S und die Information über das Privileg P sowie die Information über die Übereinstimmung von verschlüsselten personenbezogenen Daten auf dem codierten Berechtigungsschein 8 und dem Zertifikat Z sehen. Wenn alle diese Daten korrekt sind, bzw. die personenbezogenen Daten mit den vorgelegten Daten übereinstimmen, kann der Prüfer bzw. Zugangskontrolleur dem entsprechenden Inhaber des codierten Berechtigungsscheins 8 bzw. der personenbezogenen Daten den Zugang ermöglichen.

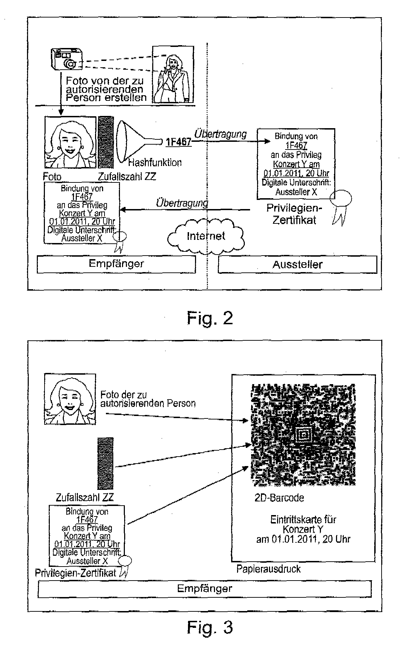

Bei dem gezeigten Ausführungsbeispiel können die persönlichen Daten PD beispielsweise durch eine Fotographie des Empfängers des Privilegs gebildet sein, wie die detaillierten Darstellungen zu dem Ausführungsbeispiel in den Figuren 2 bis 4 zeigen. Dies ermöglicht zu verhindern, dass das Privileg durch Kopie des Berechtigungsscheins kopiert wird.

Bei den personenbezogenen Daten PD handelt es sich somit um ein digitales Foto des Gesichts des Empfängers, das er auch selbst aufgenommen haben kann. Wichtig ist nur, dass der Empfänger darauf so deutlich zu erkennen ist, dass der Prüfer (z. B. der Schaffner oder der Konzerteinlasser) ohne größere Zweifel entscheiden kann, ob er derjenige ist, den man auf dem Bild sieht.

Diese Lösung macht sich die Tatsache zunutze, dass der Mensch, besser als jedes Gerät in der Lage ist, eine biometrische Verifikation insbesondere durch Gesichtserkennung durchzuführen.

Die Funktionsweise des Verfahrens zur Personenautorisierung wird anhand der Figuren 2 bis 4 in Bezug auf den Online-Kauf einer Konzertkarte näher erläutert.

Der Empfänger kauft einen Konzertbesuch am 01.01.2011 um 20 Uhr (Privileg) bei einem Online-Kartenverkäufer (Aussteller). Dazu wird in einem ersten Schritt ein Foto des Empfängers, auf dem dieser gut erkennbar ist, erstellt. Alternativ kann ein vorhandenes Foto verwendet werden. Es ist im Interesse des Empfängers, dass er auf dem Foto erkennbar ist, weil ihm sonst der Einlass in das Konzert verweigert wird.

Dem Empfänger des Privilegs wird eine einfache Softwareanwendung zur Verfügung gestellt (z. B. als Internetbrowser-Plugin), welche die folgenden Aufgaben übernimmt: Das Foto wird in ein komprimiertes Format konvertiert, so dass es möglichst wenig Speicherplatz benötigt. Anschließend wird eine Zufallszahl ZZ erzeugt. Die Daten des Fotos werden mit der Zufallszahl konkateniert. Auf den Datenwert, der sich hierbei ergibt, wird eine kollisionsresistente Hashfunktion angewandt. Es ergibt sich der Hashwert des Fotos und der Zufallszahl. Im vorliegenden Beispiel ist dies der Wert 1 F467 (vgl. Fig. 2). Dieser Hashwert wird an den Aussteller übertragen (z. B. via Internet).

Der Aussteller stellt nach dem Bezahlen ein digital signiertes Privilegien-Zertifikat aus, in dem er die Bindung des Hashwerts an das Privileg "Konzert am 01.01.2011 20 Uhr" bescheinigt. Die digitale Signatur des Zertifikats sichert dessen Authentizität und Integrität. Deswegen kann das Zertifikat ohne Bedenken an den Empfänger über Internet übertragen werden. Weder das Foto noch eine andere direkt verwertbare Information über die Identität des Benutzers wird beim Ausstellungs-Vorgang zum Aussteller übertragen.

Die Software des Empfängers nimmt das digitale Privilegien-Zertifikat entgegen und codiert es zusammen mit dem Foto und der Zufallszahl ZZ in Form eines 2D-Barcodes. Die Darstellung dieser Datenmenge (ca. 1,5 KBytes) ist mit existierenden 2D-Barcodestandards (z. B. QR-Code) möglich. Schließlich wird der Barcode auf Papier ausgedruckt. Der Empfänger hält nun ein Papierticket in Händen (siehe Fig. 3)

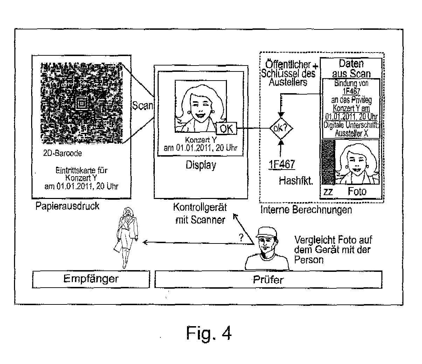

Der Empfänger präsentiert das Papierticket dem Prüfer, welcher den Barcode in sein Kontrollgerät einliest. Damit erhält das Kontrollgerät das Foto, die Zufallszahl ZZ und das Privilegien-Zertifikat. Es werden vier Schritte zur Kontrolle ausgeführt:
1) Das Foto wird auf dem Display des Geräts angezeigt. Der Kontrolleur beurteilt, ob tatsächlich die Person auf dem Foto Einlass verlangt.
2) Die digitale Signatur des Privilegien-Zertifikats wird geprüft. Dazu verwendet das Kontrollgerät den authentischen öffentlichen Schlüssel des Ausstellers.
3) Ist das bescheinigte Privileg passend, d. h. berechtigt es zum Einlass in das Konzert?
4) Das Foto und die Zufallszahl ZZ werden konkateniert. Auf den Wert, der sich hierbei ergibt, wird eine Hashfunktion angewandt, wobei die gleiche Hashfunktion, die auch bei der Ticketerstellung verwendet wurde, angewandt werden kann. Es ergibt sich der Hashwert des Fotos und der Zufallszahl ZZ. Nun wird verglichen, ob dieser Wert mit dem im Zertifikat bescheinigten Wert übereinstimmt (in Abbildung 4 ist dies der Wert 1F467).

Verlaufen alle vier Prüfungen positiv, kann die Person passieren. Zusätzlich wird der Hashwert 1F467 in der Liste der entwerteten Privilegien gespeichert. Werden mehrere Kontrollgeräte verwendet, müssen diese auf eine gemeinsame Liste zugreifen. Diese Datenübertragung kann jedoch auf den Ort der Kontrollen beschränkt werden. Das Kontrollgerät benötigt keine Online-Verbindung z. B. zu einem zentralen Server.

Obwohl die Erfindung anhand der detailliert beschriebenen Ausführungsbeispiele erläutert worden ist, ist für den Fachmann selbstverständlich, dass die Erfindung nicht auf diese Ausführungsbeispiele beschränkt ist, sondern vielmehr Abwandlungen und Änderungen möglich sind, und zwar insbesondere in der Weise, dass einzelne Merkmale der vorliegenden Erfindung weg gelassen oder andersartig miteinander kombiniert werden, ohne dass der Schutzbereich der beigefügten Ansprüche verlassen wird. Insbesondere umfasst die vorliegende Erfindung sämtliche Kombinationen aller einzelnen vorgestellten Merkmale.

Die Erfindung zeichnet sich somit durch folgende Merkmale aus:
1. Verfahren zur sicheren Ausstellung eines Berechtigungsscheines bei einer Zuordnung eines Privilegs,
   **dadurch gekennzeichnet, dass**
   vom Empfänger ein verschlüsselter, personenbezogener Datensatz erzeugt und an den Aussteller übermittelt wird, vom Aussteller ein Zertifikat über das erworbene Privileg bezogen auf den verschlüsselten, personenbezogenen Datensatz erstellt und an den Empfänger übermittelt wird und der Empfänger einen codierten Berechtigungsschein erzeugt, der die unverschlüsselten personenbezogenen Datensatz und das Zertifikats in der Codierung umfasst.
2. Verfahren nach Merkmal 1,
   **dadurch gekennzeichnet, dass**
   zur Überprüfung des Berechtigungsscheins der codierte Berechtigungsschein decodiert, der aus der Codierung entnommene unverschlüsselte personenbezogene Datensatz und der Inhalt des Zertifikats überprüft werden, wobei zur Überprüfung des Zertifikats der unverschlüsselte personenbezogene Datensatz verschlüsselt wird.
3. Verfahren nach Merkmal 2,
   **dadurch gekennzeichnet, dass**
   der aus der Codierung entnommene unverschlüsselte personenbezogene Datensatz mit vom Empfänger vorzulegenden, den personenbezogenen Daten entsprechenden Informationen verglichen wird.
4. Verfahren nach einem der vorhergehenden Merkmale,
   **dadurch gekennzeichnet, dass**
   bei der Verschlüsselung der personenbezogenen Daten die Datenmenge reduziert wird.
5. Verfahren nach einem der vorhergehenden Merkmale,
   **dadurch gekennzeichnet, dass**
   zur Verschlüsselung eine Streuwert- oder Hashfunktion auf die personenbezogenen Daten angewandt wird.
6. Verfahren nach Merkmal 5,
   **dadurch gekennzeichnet, dass**
   eine kollisionsresistente Hashfunktion eingesetzt wird.
7. Verfahren nach einem der vorhergehenden Merkmale,
   **dadurch gekennzeichnet, dass**
   der verschlüsselte personenbezogene Datensatz neben persönlichen Daten mindestens eine Zufallszahl umfasst, wobei die Zufallszahl ebenfalls in die Codierung des codierten Berechtigungsscheins mit aufgenommen wird.
8. Verfahren nach Merkmal 7,
   **dadurch gekennzeichnet, dass**
   die Zufallszahl mit den aus der Codierung entnommenen persönlichen Daten zur Überprüfung des Zertifikats verschlüsselt wird.
9. Verfahren nach einem der vorhergehenden Merkmale,
   **dadurch gekennzeichnet, dass**
   die bei der Erzeugung des verschlüsselten, personenbezogenen Datensatzes verwendete Verschlüsselungsfunktion auch bei einer Überprüfung des codierten Berechtigungsscheines eingesetzt wird.
10. Verfahren nach einem der vorhergehenden Merkmale,
   **dadurch gekennzeichnet, dass**
   das Zertifikat mit einer mit einem privaten Schlüssel des Ausstellers erzeugten digitalen Signatur versehen ist.
11. Verfahren nach Merkmal 10,
   **dadurch gekennzeichnet, dass**
   bei der Überprüfung des codierten Berechtigungsscheins die aus der Codierung entnommene digitale Signatur mit dem öffentlichen Schlüssel des Ausstellers verifiziert wird.
12. Verfahren nach einem der vorhergehenden Merkmale,
   **dadurch gekennzeichnet, dass**
   das Zertifikat mit einem geheimen oder öffentlichen Zertifikatschlüssel des Ausstellers verschlüsselt und bei der Überprüfung des codierten Berechtigungsscheins mit dem entsprechenden geheimen oder privaten Zertifikatschlüssel entschlüsselt wird.
13. Verfahren nach einem der vorhergehenden Merkmale,
   **dadurch gekennzeichnet, dass**
   Aussteller und Empfänger die Informationen über ein Computernetzwerk austauschen.
14. Verfahren nach einem der vorhergehenden Merkmale,
   **dadurch gekennzeichnet, dass**
   der Empfänger den codierten Berechtigungsschein in Form eines Papierausdrucks, einer Bilddatei oder einer sonstigen Datei erstellt.
15. Verfahren nach einem der vorhergehenden Merkmale,
   **dadurch gekennzeichnet, dass**
   die Codierung des Berechtigungsscheins eine Strich-Codierung oder eine zweidimensionale Codierung ist.
16. Verfahren nach einem der vorhergehenden Merkmale,
   **dadurch gekennzeichnet, dass**
   die personenbezogenen Daten eine Ausweisnummer, eine Kartennummer, eine Abbildung des Empfängers oder eines anderen Nutzers, eine Abbildung eines Ausweises, Führerscheins und/oder eines sonstigen persönlichen Gegenstands umfassen.
17. Verfahren nach einem der vorhergehenden Merkmale,
   **dadurch gekennzeichnet, dass**
   nach der Überprüfung des Berechtigungsscheins dieser und/oder das Zertifikat entwertet wird.
18. Verfahren nach einem der vorhergehenden Merkmale,
   **dadurch gekennzeichnet, dass**
   sich Aussteller des Privilegs und Empfänger an getrennten Orten befinden oder das Verfahren zumindest teilweise in einer Verkaufsstelle durchgeführt wird, in welcher alle erforderlichen Handlungen zur Ausstellung des Berechtigungsscheins für das Privileg unmittelbar vor Ort vorgenommen werden.
19. System zur sicheren Ausstellung eines Berechtigungsscheines bei einer Zuordnung eines Privilegs,
   **dadurch gekennzeichnet, dass**
   ein erstes Softwareprodukt vorgesehen ist, welches dem Empfänger des Privilegs ermöglicht einen verschlüsselten, personenbezogenen Datensatz zu erzeugen und an den Aussteller zu übermitteln, dass ein zweites Softwareprodukt vorgesehen ist, das es dem Aussteller ermöglicht, ein Zertifikat über das erworbene Privileg bezogen auf den verschlüsselten, personenbezogenen Datensatz zu erstellen und an den Empfänger zu übermitteln, wobei das erste Softwareprodukt so hergerichtet ist, dass der Empfänger einen codierten Berechtigungsschein erzeugen kann, der den unverschlüsselten personenbezogenen Datensatz und die Informationen des Zertifikats in der Codierung umfasst.
20. System nach Merkmal 19,
   **dadurch gekennzeichnet, dass**
   ein Datenkontrollgerät zur Überprüfung des Berechtigungsscheins vorgesehen ist, welches eine Leseeinheit zum Lesen des codierten Berechtigungsscheins und eine Auswerteeinheit umfasst, mittels denen der codierte Berechtigungsschein decodiert werden kann, wobei zusätzlich eine Anzeigeeinheit vorgesehen ist, in welcher der aus der Codierung entnommene unverschlüsselte personenbezogene Datensatz und der Inhalt des Zertifikats zur Überprüfung angezeigt werden können, wobei zur Überprüfung des Zertifikats der unverschlüsselte personenbezogene Datensatz von der Auswerteeinheit verschlüsselt wird.
21. System nach Merkmal 20,
   **dadurch gekennzeichnet, dass**
   der aus der Codierung entnommene, unverschlüsselte personenbezogene Datensatz, der auf der Anzeigeeinheit des Datenkontrollgeräts angezeigt wird, von einem Bediener mit vom Empfänger vorzulegenden, den personenbezogenen Daten entsprechenden Informationen verglichen werden kann.
22. System nach einem der Merkmale 19 bis 21,
   **dadurch gekennzeichnet, dass**
   bei der Verschlüsselung der personenbezogenen Daten die Datenmenge reduziert wird.
23. System nach einem der Merkmale 19 bis 22,
   **dadurch gekennzeichnet, dass**
   zur Verschlüsselung eine Streuwert- oder Hashfunktion auf die personenbezogenen Daten angewandt wird.
24. System nach Merkmal 23,
   **dadurch gekennzeichnet, dass**
   eine kollisionsresistente Hashfunktion eingesetzt wird.
25. System nach einem der Merkmale 19 bis 24,
   **dadurch gekennzeichnet, dass**
   der verschlüsselte personenbezogene Datensatz neben persönlichen Daten mindestens eine Zufallszahl umfasst, wobei die Zufallszahl ebenfalls in die Codierung des codierten Berechtigungsscheins mit aufgenommen wird.
26. System nach Merkmal 25,
   **dadurch gekennzeichnet, dass**
   die Zufallszahl mit den aus der Codierung entnommenen persönlichen Daten zur Überprüfung des Zertifikats verschlüsselt wird.
27. System nach einem der Merkmale 19 bis 26,
   **dadurch gekennzeichnet, dass**
   die bei der Erzeugung des verschlüsselten, personenbezogenen Datensatzes verwendete Verschlüsselungsfunktion auch bei einer Überprüfung des codierten Berechtigungsscheines eingesetzt wird.
28. System nach einem der Merkmale 19 bis 27,
   **dadurch gekennzeichnet, dass**
   das Zertifikat mit einer mit einem privaten Schlüssel des Ausstellers erzeugten digitalen Signatur versehen ist.
29. System nach Merkmal 28,
   **dadurch gekennzeichnet, dass**
   bei der Überprüfung des codierten Berechtigungsscheins die aus der Codierung entnommene digitale Signatur mit dem öffentlichen Schlüssel des Ausstellers verifiziert wird.
30. System nach einem der Merkmale 19 bis 29,
   **dadurch gekennzeichnet, dass**
   das Zertifikat mit einem geheimen oder öffentlichen Zertifikatschlüssel des Ausstellers verschlüsselt und bei der Überprüfung des codierten Berechtigungsscheins mit dem entsprechenden geheimen oder privaten Zertifikatschlüssel entschlüsselt wird.
31. System nach einem der Merkmale 19 bis 30,
   **dadurch gekennzeichnet, dass**
   Aussteller und Empfänger die Informationen über ein Computernetzwerk austauschen.
32. System nach einem der Merkmale 19 bis 31,
   **dadurch gekennzeichnet, dass**
   das erste Softwareprodukt so ausgestaltet ist, dass der Empfänger den codierten Berechtigungsschein in Form eines Papierausdrucks, einer Bilddatei oder einer sonstigen Datei erstellen kann.
33. System nach einem der Merkmale 19 bis 32,
   **dadurch gekennzeichnet, dass**
   die Codierung des Berechtigungsscheins eine Strich-Codierung oder eine zweidimensionale Codierung ist.
34. System nach einem der Merkmale 19 bis 33,
   **dadurch gekennzeichnet, dass**
   die personenbezogenen Daten eine Ausweisnummer, eine Kartennummer, eine Abbildung des Empfängers oder eines anderen Nutzers, eine Abbildung eines Ausweises, Führerscheins und/oder eines sonstigen persönlichen Gegenstands umfassen.
35. System nach einem der Merkmale 19 bis 34,
   **dadurch gekennzeichnet, dass**
   eine Datenbank vorgesehen ist, welche die ausgegebenen und die überprüften Zertifikate enthält.
36. System nach Merkmal 35,
   **dadurch gekennzeichnet, dass**
   mehrere Datenkontrollgeräte und eine zentrale Datenbank vorgesehen sind, wobei die Datenkontrollgeräte und die Datenbank so hergerichtet sind, dass sie Informationen austauschen können.
37. System nach einem der Merkmale 19 bis 36,
   **dadurch gekennzeichnet, dass**
   sich Aussteller des Privilegs und Empfänger an getrennten Orten befinden oder das System in einer Verkaufsstelle eingerichtet ist, bei welcher alle erforderlichen Handlungen zur Ausstellung des Berechtigungsscheins für das Privileg unmittelbar vor Ort vorgenommen werden.
38. Datenkontrollgerät zur Überprüfung eines codierten Berechtigungsscheins, welches eine Leseeinheit zum Lesen des codierten Berechtigungsscheins und eine Auswerteeinheit umfasst, mittels denen der codierte Berechtigungsschein decodiert werden kann, wobei zusätzlich eine Anzeigeeinheit vorgesehen ist, in welcher die aus der Codierung entnommene Information angezeigt werden kann,
   **dadurch gekennzeichnet, dass**
   die Auswerteeinheit eine Verschlüsselungseinheit umfasst, mittels der aus der Codierung entnommene Informationen verschlüsselt werden können.
39. Datenkontrollgerät nach Merkmal 38,
   **dadurch gekennzeichnet, dass**
   Verbindungsmittel zur kabelgebundenen oder kabellosen Verbindung mit anderen Datenkontrollgeräten und/oder einer Zentraleinheit vorgesehen sind.
40. Datenkontrollgerät nach Merkmal 38 oder 39,
   **dadurch gekennzeichnet, dass**
   das Datenkontrollgerät Speichermittel umfasst, die Informationen über genutzte Zertifikate speichern und/oder Teil einer zentralen Datenbank sind.
41. Softwareprodukt, welches das erste und/oder zweite Softwareprodukt des Systems nach einem der Merkmale 19 bis 37 umfasst.

## Patentansprüche

1. Verfahren zur sicheren Ausstellung eines Berechtigungsscheines bei einer Zuordnung eines Privilegs,
**dadurch gekennzeichnet, dass**
vom Empfänger ein verschlüsselter, personenbezogener Datensatz erzeugt und an den Aussteller übermittelt wird, vom Aussteller ein Zertifikat über das erworbene Privileg bezogen auf den verschlüsselten, personenbezogenen Datensatz erstellt und an den Empfänger übermittelt wird und der Empfänger einen codierten Berechtigungsschein erzeugt, der die unverschlüsselten personenbezogenen Datensatz und das Zertifikats in der Codierung umfasst.

2. Verfahren nach Anspruch 1,
**dadurch gekennzeichnet, dass**
zur Überprüfung des Berechtigungsscheins der codierte Berechtigungsschein decodiert, der aus der Codierung entnommene unverschlüsselte personenbezogene Datensatz und der Inhalt des Zertifikats überprüft werden, wobei zur Überprüfung des Zertifikats der unverschlüsselte personenbezogene Datensatz verschlüsselt wird.

3. Verfahren nach Anspruch 2,
**dadurch gekennzeichnet, dass**
der aus der Codierung entnommene unverschlüsselte personenbezogene Datensatz mit vom Empfänger vorzulegenden, den personenbezogenen Daten entsprechenden Informationen verglichen wird.

4. Verfahren nach einem der vorhergehenden Ansprüche,
**dadurch gekennzeichnet, dass**
bei der Verschlüsselung der personenbezogenen Daten die Datenmenge reduziert wird.

5. Verfahren nach einem der vorhergehenden Ansprüche,
**dadurch gekennzeichnet, dass**
zur Verschlüsselung eine Streuwert- oder Hashfunktion auf die personenbezogenen Daten angewandt wird.

6. Verfahren nach einem der vorhergehenden Ansprüche,
**dadurch gekennzeichnet, dass**
der verschlüsselte personenbezogene Datensatz neben persönlichen Daten mindestens eine Zufallszahl umfasst, wobei die Zufallszahl ebenfalls in die Codierung des codierten Berechtigungsscheins mit aufgenommen wird.

7. Verfahren nach Anspruch 7,
**dadurch gekennzeichnet, dass**
die Zufallszahl mit den aus der Codierung entnommenen persönlichen Daten zur Überprüfung des Zertifikats verschlüsselt wird.

8. Verfahren nach einem der vorhergehenden Ansprüche,
**dadurch gekennzeichnet, dass**
die bei der Erzeugung des verschlüsselten, personenbezogenen Datensatzes verwendete Verschlüsselungsfunktion auch bei einer Überprüfung des codierten Berechtigungsscheines eingesetzt wird.

9. Verfahren nach einem der vorhergehenden Ansprüche,
**dadurch gekennzeichnet, dass**
das Zertifikat mit einer mit einem privaten Schlüssel des Ausstellers erzeugten digitalen Signatur versehen ist.

10. Verfahren nach Anspruch 10,
**dadurch gekennzeichnet, dass**
bei der Überprüfung des codierten Berechtigungsscheins die aus der Codierung entnommene digitale Signatur mit dem öffentlichen Schlüssel des Ausstellers verifiziert wird.

11. System zur sicheren Ausstellung eines Berechtigungsscheines bei einer Zuordnung eines Privilegs,
**dadurch gekennzeichnet, dass**
ein erstes Softwareprodukt vorgesehen ist, welches dem Empfänger des Privilegs ermöglicht einen verschlüsselten, personenbezogenen Datensatz zu erzeugen und an den Aussteller zu übermitteln, dass ein zweites Softwareprodukt vorgesehen ist, das es dem Aussteller ermöglicht, ein Zertifikat über das erworbene Privileg bezogen auf den verschlüsselten, personenbezogenen Datensatz zu erstellen und an den Empfänger zu übermitteln, wobei das erste Softwareprodukt so hergerichtet ist, dass der Empfänger einen codierten Berechtigungsschein erzeugen kann, der den unverschlüsselten personenbezogenen Datensatz und die Informationen des Zertifikats in der Codierung umfasst.

12. System nach Anspruch 11,
**dadurch gekennzeichnet, dass**
ein Datenkontrollgerät zur Überprüfung des Berechtigungsscheins vorgesehen ist, welches eine Leseeinheit zum Lesen des codierten Berechtigungsscheins und eine Auswerteeinheit umfasst, mittels denen der codierte Berechtigungsschein decodiert werden kann, wobei zusätzlich eine Anzeigeeinheit vorgesehen ist, in welcher der aus der Codierung entnommene unverschlüsselte personenbezogene Datensatz und der Inhalt des Zertifikats zur Überprüfung angezeigt werden können, wobei zur Überprüfung des Zertifikats der unverschlüsselte personenbezogene Datensatz von der Auswerteeinheit verschlüsselt wird.

13. System nach Anspruch 12,
**dadurch gekennzeichnet, dass**
der aus der Codierung entnommene, unverschlüsselte personenbezogene Datensatz, der auf der Anzeigeeinheit des Datenkontrollgeräts angezeigt wird, von einem Bediener mit vom Empfänger vorzulegenden, den personenbezogenen Daten entsprechenden Informationen verglichen werden kann und eine Datenbank vorgesehen ist, welche die ausgegebenen und die überprüften Zertifikate enthält.

14. Datenkontrollgerät zur Überprüfung eines codierten Berechtigungsscheins, welches eine Leseeinheit zum Lesen des codierten Berechtigungsscheins und eine Auswerteeinheit umfasst, mittels denen der codierte Berechtigungsschein decodiert werden kann, wobei zusätzlich eine Anzeigeeinheit vorgesehen ist, in welcher die aus der Codierung entnommene Information angezeigt werden kann,
**dadurch gekennzeichnet, dass**
die Auswerteeinheit eine Verschlüsselungseinheit umfasst, mittels der aus der Codierung entnommene Informationen verschlüsselt werden können.

15. Softwareprodukt, welches das erste und/oder zweite Softwareprodukt des Systems nach einem der Ansprüche 11 bis 13 umfasst.
